# EUROPEAN PATENT APPLICATION

(11) **EP 4 059 910 A1**
(43) Date of publication of application: **21.09.2022**
(21) Application number: 21198201.2
(22) Date of filing: 22.09.2021
(51) Int. Cl.: C04B 35/043, C04B 35/626, C04B 35/636, B22D 41/02

(54) **MAG-GALAXITE SPINEL REFRACTORY MATERIAL AND PREPARATION METHOD AND USE THEREOF**

(30) Priority: 16.03.2021 CN 202110280074
(71) Applicant: Marvels Refractories (Anshan) Co., Ltd., 114100 Anshan City Liaoning (CN)
(72) Inventor: LU, Yichun, Anshan City, 114100 (CN); WANG, Guipeng, Anshan City, 114100 (CN)
(74) Representative: SONN Patentanwälte OG

(57) **Abstract**

The disclosure belongs to the technical field of refractory materials, and in particular relates to a mag-galaxite spinel refractory material and a preparation method and use thereof. The present disclosure provides a mag-galaxite spinel refractory material, which is obtained by burning raw materials including, in parts by mass, 75-85 parts of a magnesite clinker; 10-20 parts of a magnesia-alumina spinel; 1.5-5.0 parts of an aluminum compound; 1.0-5.0 parts of a manganese compound; 1.0-5.0 parts of a magnesium compound; and 2.0-3.5 parts of a binder. In the present disclosure, a galaxite mineral phase could be formed from the aluminum compound and the manganese compound, and a magnesia-alumina spinel mineral phase could be formed from the magnesite clinker, the magnesium compound and the aluminum compound. Periclase mineral phase in the magnesite clinker, galaxite mineral phase and magnesia-alumina spinel mineral phase could be stably solid solutionized with each other, forming a stable structure, thereby improving volume stability and chemical stability of the mag-galaxite spinel refractory material, and improving the adherence characteristic, thermal shock resistance and chemical corrosion resistance.

## Description

### TECHNICAL FIELD

The present disclosure relates to the technical field of refractory materials, and in particular to a mag-galaxite spinel refractory material and a preparation method and use thereof.

### BACKGROUND

Magnesia-chrome refractory materials are widely used in cement rotary kilns due to their good adherence to clinker coating and resistance to chemical corrosion of cement clinkers. However, the residual magnesia-chrome bricks after use contain hexavalent chromium compound(s) (portion of chromium in magnesia-chrome bricks could be converted from Cr³⁺ to highly toxic and carcinogenic Cr⁶⁺), and the compound(s) is a water-soluble carcinogen and will cause long-term pollution to the environment. Therefore, it is an inevitable trend for refractory materials for cement rotary kilns to be chrome-free.

In recent years, the chrome-free refractory materials used in cement kilns are mainly magnesia-alumina spinel bricks or magnesia-hercynite spinel bricks. Among them, the magnesia-hercynite spinel bricks exhibit better adherence characteristic to clinker coating in comparison with the magnesia-alumina spinel bricks, but poor thermal shock stability, and are mainly used in the burning zone of cement rotary kilns, while the magnesia-alumina spinel bricks exhibit good thermal shock stability, but a poor adherence characteristic to clinker coating, and are mainly used for the transition zone of cement rotary kilns. Therefore, for the current cement rotary kiln lining, an integrated configuration of the whole kiln with one quality material could not be realized.

In another aspect, in domestic, people gradually focus on promoting the environmentally-friendly integration of rotary kilns. Increasingly, cement or lime rotary kilns need to co-process municipal waste. The valence changing effect of iron ions in the existing mag-hercynite bricks makes them sensitive to the atmosphere in the kiln, which becomes particularly worse when used in cement production lines for the purpose of treating waste; moreover, magnesia-alumina spinel bricks, when used in a transition zone that is not protected by a kiln coating, exhibit poor resistance to chemical corrosion of complex materials. Therefore, it is difficult for the current cement rotary kiln to realize co-processing and chemical corrosion resistance of the lining refractory material.

### SUMMARY

In view of this, the present disclosure provides a mag-galaxite spinel refractory material and a preparation method and use thereof. The mag-galaxite spinel (magnesia galaxite spinel) refractory material according to the present disclosure has an excellent adherence characteristic to clinker coating, thermal shock resistance, and chemical corrosion resistance, and could be used in both the burning zone and the transition zone of the cement rotary kiln.
In order to solve the above technical problems, the present disclosure provides a method for preparing a mag-galaxite spinel refractory material, comprising the steps of
subjecting an aluminum compound, a manganese compound and a magnesium compound to a first mixing, a pre-calcining, and a co-milling in sequence, to obtain a co-milled powder;
subjecting the co-milled powder, a magnesite clinker, a magnesia-alumina spinel and a binder to a second mixing, to obtain a final mixture;
forming the final mixture, to obtain a green brick; and
burning the green brick, to obtain the mag-galaxite spinel refractory material.

In a preferred embodiment,
75-85 parts of a magnesite clinker;
10-20 parts of a magnesia-alumina spinel;
1.5-5.0 parts of an aluminum compound;
1.0-5.0 parts of a manganese compound;
1.0-5.0 parts of a magnesium compound; and
2.0-3.5 parts of a binder are used (all in parts by mass).
In some embodiments, the co-milled powder has a particle size of not more than 0.045 mm (as measured by ISO 2926:1974, NEQ).

In some embodiments, the magnesite clinker comprises MgO in an amount of not less than 97% by mass as determined by ISO12677:2003, MOD. In some embodiments, the magnesite clinker comprises a granular magnesite clinker and a finely powdery magnesite clinker, and a mass ratio of the granular magnesite clinker and the finely powdery magnesite clinker is in the range of (1.5-3) : 1. In some embodiments, the granular magnesite clinker has a particle size of 0.088-5 mm as measured by ISO 2926:1974, NEQ, and the finely powdery magnesite clinker has a particle size of not larger than 0.063 mm as measured by ISO 2926:1974, NEQ. In some embodiments, the granular magnesite clinker has a gradient particle size distribution of, in percentages by mass,

| | |
|---|---|
| 0.088-0.999 mm accounting for | 25-30%; |
| 1-2.999 mm accounting for | 43-48%; |
| 3-5 mm accounting for | 24-28%, |

The particle size distribution is determined by sieving, which follows Gaudin-Schuhmann equation.

In some embodiments, the magnesium compound is one or more selected from the group consisting of MgO, Mg(OH)₂, and MgCO₃.

In some embodiments, the manganese compound is one or more selected from the group consisting of MnO, MnO₂, Mn₂O₃, and Mn₃O₄, and the manganese compound has a particle size of less than 0.063 mm as measured by ISO6230:1989, IDT. In some embodiments, the manganese compound has a purity of not less than 70%, which may be determined by ISO 4159:1978.

In some embodiments, the aluminum compound is one or more selected from the group consisting of Al₂O₃, and Al(OH)₃, and the aluminum compound has a particle size of less than 0.045 mm as measured by ISO 13320:2009. In some embodiments, the aluminum compound has a purity of not less than 90%, which may be determined by X-ray fluorescence according to ISO12677:2003, MOD.

In some embodiments, the magnesia-alumina spinel is one or more selected from the group consisting of a sintered magnesia-alumina spinel and a fused magnesia-alumina spinel. In some embodiments, the magnesia-alumina spinel comprises alumina and magnesia, and the total amount of alumina and magnesia is not less than 90% by mass as determined by ISO12677:2003, MOD, and the magnesia-alumina spinel has a particle size of less than 3 mm as measured by ISO 2926:1974, NEQ.

In some embodiments, the binder is one or more selected from the group consisting of dextrin solution, calcium lignosulfonate solution, methyl cellulose solution, and sulfite pulp waste liquid.

In some embodiments, subjecting the co-milled powder, a magnesite clinker, a magnesia-alumina spinel, and a binder to a second mixing comprises the steps of
subjecting a granular magnesite clinker, a magnesia-alumina spinel, and a binder to a third mixing, to obtain a primary mixture; and
subjecting the primary mixture, the co-milled powder, and a finely powdery magnesite clinker to a fourth mixing, to obtain a final mixture.

In some embodiments, the green brick is burnt at a temperature of 1550-1680 °C for 10-15 hours.

The present disclosure also provides a mag-galaxite spinel refractory material obtainable by the method according to the present invention.

The present disclosure further provides the use of the mag-galaxite spinel refractory material obtainable by the method according to the present invention in a lining of a cement or lime rotary kiln.

The present disclosure provides a mag-galaxite spinel refractory material, which is obtained by burning raw materials comprising, in parts by mass, 75-85 parts of a magnesite clinker, 10-20 parts of a magnesia-alumina spinel, 1.5-5.0 parts of an aluminum compound, 1.0-5.0 parts of a manganese compound, 1.0-5.0 parts of a magnesium compound, and 2.0-3.5 parts of a binder. In the present disclosure, a galaxite mineral phase could be formed from the aluminum compound and the manganese compound, and a magnesia-alumina spinel mineral phase could be formed from the magnesite clinker, the magnesium compound and the aluminum compound; the galaxite and magnesia-alumina spinel could be stably solid solutionized due to the commonality with alumina. Periclase phase in the magnesite clinker, the galaxite mineral phase and magnesia-alumina spinel mineral phase could be stably solid solutionized with each other, thereby improving volume stability and chemical inertness of the mag-galaxite spinel refractory material, and improving the adherence characteristic to the clinker coating and thermal shock resistance of the mag-galaxite spinel refractory material, thus being used in the burning zone and transition zone of a cement rotary kiln.

The present disclosure also provides a method for preparing the mag-galaxite spinel refractory material as described in the above technical solution, comprising steps of subjecting an aluminum compound, a manganese compound, and a magnesium compound to a first mixing, a pre-calcining, and a co-milling in sequence, to obtain a co-milled powder; subjecting the co-milled powder, a magnesite clinker, a magnesia-alumina spinel, and a binder to a second mixing, to obtain a final mixture; forming the final mixture, to obtain a green brick; and burning the green brick, to obtain the mag-galaxite spinel refractory material. In the present disclosure, during the pre-calcining and the co-milling, a magnesia-alumina spinel mineral phase could be formed from the aluminum compound and the magnesium compound, and a galaxite mineral phase could be formed from the manganese compound and the aluminum compound. During the burning of the green brick, the magnesia-alumina spinel mineral phase, the galaxite mineral phase, and periclase phase in the magnesite clinker could be co-melt, to obtain a stable eutectic structure.

### DETAILED DESCRIPTION OF THE EMBODIMENTS

The present disclosure provides a method for preparing a mag-galaxite spinel refractory material, comprising the steps of
subjecting an aluminum compound, a manganese compound and a magnesium compound to a first mixing, a pre-calcining, and a co-milling in sequence, to obtain a co-milled powder;
subjecting the co-milled powder, a magnesite clinker, a magnesia-alumina spinel and a binder to a second mixing, to obtain a final mixture;
forming the final mixture, to obtain a green brick; and
burning the green brick, to obtain the mag-galaxite spinel refractory material.

In some embodiments, 75-85 parts of a magnesite clinker;
10-20 parts of a magnesia-alumina spinel;
1.5-5.0 parts of an aluminum compound;
1.0-5.0 parts of a manganese compound;
1.0-5.0 parts of a magnesium compound; and
2.0-3.5 parts of a binder are used (in parts by mass).
In the present disclosure, the magnesite clinker, also named magnesia material, includes but is not limited to a fused magnesia, and a sintered magnesia.

In terms of parts by mass, the raw materials for preparing the mag-galaxite spinel refractory material of the present disclosure comprises 75 to 85 parts of a magnesite clinker, preferably 76 to 83 parts, and more preferably 78 to 81 parts. In the present disclosure, the magnesite clinker preferably includes a fused magnesia and/or a sintered magnesia, more preferably a sintered magnesia. In the present disclosure, the magnesite clinker comprises MgO in an amount of not less than 97% by mass, more preferably 97.2% to 98.5% by mass, as determined by ISO12677:2003, MOD. In some embodiments of the present disclosure, the magnesite clinker comprises a granular magnesite clinker and a finely powdery magnesite clinker, wherein the granular magnesite clinker has a particle size of 0.088-5 mm, as measured by ISO 2926:1974, NEQ, and the finely powdery magnesite clinker has a particle size of not larger than 0.063 mm, as measured by ISO 2926:1974, NEQ. In the present disclosure, the mass ratio of the granular magnesite clinker and the finely powdery magnesite clinker is preferably in the range of (1.5-3) : 1, and more preferably (2-2.5) : 1. In some embodiments of the present disclosure, the granular magnesite clinker has a gradient particle size distribution of, in percentages by mass,

| | |
|---|---|
| 0.088-0.999 mm accounting for | 25-30%; |
| 1-2.999 mm accounting for | 43-48%; |
| 3-5 mm accounting for | 24-28%, |

and such particle size distribution is determined by sieving, which follows Gaudin-Schuhmann equation.
In other embodiments of the present disclosure, the granular magnesite clinker has a gradient particle size distribution of, in percentages by mass

| | |
|---|---|
| 0.088-0.999 mm accounting for | 28%; |
| 1-2.999 mm accounting for | 46%; |
| 3-5 mm accounting for | 26%, |

and such particle size distribution is determined by sieving, which follows Gaudin-Schuhmann equation.

The present disclosure makes it possible to increase the bulk density of the mag-galaxite spinel refractory material by limiting the particle size of the magnesite clinker, thereby reducing the apparent porosity of the mag-galaxite spinel refractory material and improving the mechanical strength of the mag-galaxite spinel refractory material.

On the basis of the mass parts of the magnesite clinker, the raw materials for preparing the mag-galaxite spinel refractory material of the present disclosure comprise 10-20 parts of magnesia-alumina spinel, preferably 13-16 parts. In the present disclosure, the magnesia-alumina spinel preferably includes one of a sintered magnesia-alumina spinel and a fused magnesia-alumina spinel, and more preferably is a fused magnesia-alumina spinel. In the present disclosure, the magnesia-alumina spinel comprises aluminium oxide and magnesium oxide, and the total amount of aluminium oxide and magnesium oxide is preferably not less than 90% by mass, more preferably 95 to 98.5%, as determined by ISO12677:2003, MOD. In some embodiments, he magnesia-alumina spinel has a particle size of less than 3 mm, and preferably 0.1 to 3 mm, as measured by ISO 2926:1974, NEQ. In the present disclosure, the magnesia-alumina spinel has a relatively small expansion coefficient. In the present disclosure, the addition of the magnesia-alumina spinel in the amount as defined in the above enables thermal shock stability and mechanical flexibility of the mag-galaxite spinel refractory material to be improved.

On the basis of the mass parts of the magnesite clinker, the raw materials for preparing the mag-galaxite spinel refractory material of the present disclosure comprise 1.5 to 5.0 parts of an aluminum compound, preferably 2.8 to 4.0 parts, and more preferably 3.0 to 3.8 parts. In some embodiments of the present disclosure, the aluminum compound includes one or more of Al₂O₃ and Al(OH)₃, and more preferably is Al₂O₃. Al₂O₃ preferably includes one or more of calcined aluminium oxide, activated aluminium oxide, fused aluminium oxide, and sintered aluminium oxide. In some embodiments of the present disclosure, the aluminum compound has a purity of not less than 90%, more preferably 98.5 to 99.9%, which may be determined by X-ray fluorescence according to ISO12677:2003, MOD. In some embodiments, the aluminum compound has a particle size of less than 0.045 mm, and more preferably 0.005 to 0.020 mm, as measured by ISO 13320:2009.

On the basis of the mass parts of the magnesite clinker, the raw materials for preparing the mag-galaxite spinel refractory material of the present disclosure comprise 1.0 to 5.0 parts of a manganese compound, preferably 1.3 to 3 parts, and more preferably 1.5 to 2.8 parts. In some embodiments of the present disclosure, the manganese compound includes one or more of MnO, MnO₂, Mn₂O₃ and Mn₃O₄, more preferably MnO₂. When the manganese compound includes two or more of the above-mentioned specific substances, there is no particular limitation to the ratio of the specific substances, and any ratio may be used. In some embodiments of the present disclosure, the manganese compound has a purity of not less than 70%, and more preferably 75-85%, which may be determined by ISO 4159:1978. In some embodiments, the manganese compound has a particle size of less than 0.063 mm, and preferably less than 0.045 mm, as measured by ISO6230:1989, IDT. The particle size of the manganese compound of the present disclosure as described above makes it possible to increase the utilization rate of the manganese compound, and is beneficial to obtain the manganese-aluminum spinel mineral phase.

On the basis of the mass parts of the magnesite clinker, the raw materials for preparing the mag-galaxite spinel refractory material of the present disclosure comprise 1.0 to 5.0 parts of a magnesium compound, preferably 1.0 to 3 parts, and more preferably 1.0 to 2 parts. In the present disclosure, the magnesium compound preferably includes one or more of MgO, Mg(OH)₂, and MgCO₃, and more preferably MgO or MgCO₃.

On the basis of the mass parts of the magnesite clinker, the raw materials for preparing the mag-galaxite spinel refractory material of the present disclosure comprises 2.0 to 3.5 parts of a binder, and preferably 2.1 to 3.0 parts. In some embodiments of the present disclosure, the binder includes one or more of dextrin solution, calcium lignosulfonate solution, methyl cellulose solution and sulfite pulp waste liquid. In some embodiments, the binder has a density of 1.2 to 1.35 g/ml, and a viscosity of 15 to 50 mPa·s. In the present disclosure, the binder could directly volatilize during the burning process, and achieve a good early strength of the brick after being formed.

The present disclosure also provides a method for preparing the mag-galaxite spinel refractory material as described in the above technical solution, comprising
subjecting an aluminum compound, a manganese compound, and a magnesium compound to a first mixing, a pre-calcining, and a co-milling in sequence, to obtain a co-milled powder;
subjecting the co-milled powder, a magnesite clinker, a magnesia-alumina spinel, and a binder to a second mixing, to obtain a final mixture;
forming the final mixture, to obtain a green brick; and
burning the green brick, to obtain the mag-galaxite spinel refractory material.

In the present disclosure, the aluminum compound, the manganese compound and the magnesium compound are subjected to a first mixing, a pre-calcining and a co-milling in sequence, to obtain a co-milled powder. In some embodiments of the present disclosure, the co-milled powder has a particle size of not more than 0.045 mm, and preferably 0.005 to 0.045 mm, as measured by ISO 2926:1974, NEQ. In the present disclosure, there is no particular limitation to the first mixing, as long as they could be mixed to be uniform. In the present disclosure, there is no particular limitation to the co-milling, as long as the co-milled powder with a required particle size could be obtained. In some embodiments of the present disclosure, the co-milling is carried out in a 4R3216 type Raymond mill; the co-milling is performed for 30 to 45 minutes. In the present disclosure, the pre-calcining is preferably performed at a temperature of 1350-1500 °C, more preferably 1400-1450 °C; the pre-calcining is preferably performed for 2.8-3.2 hours, more preferably 3 hours. In some embodiments of the present disclosure, the pre-calcining comprises placing the mixture obtained after the first mixing in a box. In the present disclosure, the pre-calcining could make it possible to prevent the mixture obtained after the first mixing from being directly burnt, which would cause a bursting due to vigorous reactions, and make the pre-calcined product more stable during the burning.

After the co-milled powder is obtained, in the present disclosure, the co-milled powder, a magnesite clinker, a magnesia-alumina spinel and a binder are subjected to a second mixing, to obtain a final mixture. In some embodiments of the present disclosure, subjecting the co-milled powder, a magnesite clinker, a magnesia-alumina spinel, and a binder to a second mixing comprises steps of
subjecting a granular magnesite clinker, a magnesia-alumina spinel, and a binder to a third mixing, to obtain a primary mixture; and
subjecting the primary mixture, the co-milled powder, and a finely powdery magnesite clinker to a fourth mixing, to obtain a final mixture.

In the present disclosure, the granular magnesite clinker, the magnesia-alumina spinel, and the binder are subjected to a third mixing, to obtain the primary mixture. In some embodiments of the present disclosure, the binder is a solution. In some embodiments of the present disclosure, the binder has a density of 1.2 to 2.0 g/mL, and more preferably 1.2 to 1.35 g/mL. In the present disclosure, there is no particular limitation to the third mixing, as long as they could be mixed to be uniform. In some embodiments of the present disclosure, the third mixing is carried out in a mixer for 8-12 minutes at a rotation speed of the mixing plate of 11 r/min, and a rotation speed of the mixing rotor of 100-300 r/min.

After the primary mixture is obtained, in the present disclosure, the primary mixture, the co-milled powder and the finely powdery magnesite clinker are subjected to a fourth mixing, to obtain a final mixture. In the present disclosure, there is no particular limitation to the fourth mixing, as long as they could be mixed to be uniform. In some embodiments of the present disclosure, the fourth mixing is carried out in a mixer for 10-15 minutes at a rotation speed of the mixing plate of 11 r/min, and a rotation speed of the stirring rotor of 100-300 r/min.

In the present disclosure, raw materials are mixed step-by-step according to the above-mentioned mixing process, which could ensure that a layer of a binder is uniformly attached to the surface of the granular magnesite clinker and magnesia-alumina spinel, thereby being beneficial to bond with the powder, to form a uniform final mixture, and avoid uneven composition of the mag-galaxite spinel refractory material due to the formation of a ball when the powder contacts with the binder.

After the final mixture is obtained, in the present disclosure, the final mixture is formed, to obtain a green brick. In some embodiments of the present disclosure, the forming is performed in a mold. In the present disclosure, there is no particular limitation to the shape and size of the mold, and the shape and size of the mold may be limited as requirements. In some embodiments of the present disclosure, the final mixture is placed in a mold for forming, and dried after being ejected from the mold. In some embodiments of the present disclosure, the forming is performed under a pressure of 13-20 kN/cm², more preferably 15-18 kN/cm². In the present disclosure, there is no particular limitation to the forming time, as long as the final mixture could be formed. In the present disclosure, the drying is preferably performed at a temperature of 120 to 250 °C, more preferably 150 to 200 °C; the drying is preferably performed for 48 to 72 hours, more preferably 55 to 60 hours.

In the present disclosure, after the green brick is obtained, the green brick is burnt to obtain the mag-galaxite spinel refractory material. In the present disclosure, burning the green brick is preferably performed at a temperature of 1550-1680 °C, more preferably 1580-1620 °C; the holding time is preferably 8-15 hours, more preferably 10-15 hours. The present disclosure makes it possible to form a stable structure and mineral phase through the burning. With the formation of the structure and mineral phase, the burnt product has a reduced porosity and an increased volume density, and thus the burnt brick becomes an article with a certain shape and structural strength.

The present disclosure also provides a mag-galaxite spinel refractory material obtainable by the method according to the present invention.

The present disclosure also provides use of the mag-galaxite spinel refractory material obtainable by the method as described in the above technical solution in a lining of a cement or lime rotary kiln. In the present disclosure, the mag-galaxite spinel refractory material could be used in a lining of burning zone and transition zone of a cement or lime rotary kiln. In some embodiments of the present disclosure, the use of the mag-galaxite spinel refractory material in a lining of a cement or lime rotary kiln is as follows: the mag-galaxite spinel refractory material is used as a refractory brick for masonry on the inner surface of a cement or lime rotary kiln. In the present disclosure, there is no particular limitation to the means for masonry, and any means well known to the skilled in the art could be used.

In order to further illustrate the present disclosure, the technical solutions provided by the present disclosure will be described in detail below in conjunction with examples, which should not be understood as limiting the scope of the present disclosure.

### Example

Unless otherwise specified, the wording "parts" used below refers to parts by mass.

### Example 1

53.3 parts of calcined alumina (with a particle size of 0.005-0.015 mm, and a purity of 99.5%), 13 parts of manganese dioxide (with a particle size of 0.030-0.045 mm, and a purity of 72%), 12 parts of manganese monoxide (with a particle size of 0.050-0.062 mm, and a purity of 75%) and 21.7 parts of magnesium carbonate were mixed. The resulting mixture was placed in a box and pre-calcined at 1400 °C for 3 hours, and then co-milled in 4R3216 type Raymond mill for 45 minutes, obtaining a co-milled powder with a particle size of 0.045 mm.

2.2 kg of a dextrin solution (with a density of 1.26 g/mL) and 0.5 kg of a calcium lignosulfonate solution (with a density of 1.26 g/mL) was prepared and mixed, obtaining a binder.

35 kg of granular sintered magnesia (comprising 97.5% by mass of MgO) with a particle size distribution as follows: 0.088-0.999 mm accounting for 26%, 1-2.999 mm accounting for 47%, and 3-5 mm accounting for 27%, 22 kg of granular fused magnesia (comprising 97.2% by mass of MgO) with a particle size distribution as follows: 0.088-0.999 mm accounting for 28%, 1-2.999 mm accounting for 45%, 3-5 mm accounting for 27%, 13 kg of fused magnesia-alumina spinel with a particle size of 0.1-3 mm (the total amount of alumina and magnesia being 98.5% by mass), and the binder were mixed in a mixer (during which, the rotation speed of the mixing plate was 11 r/min, and the rotation speed of the stirring rotor was 200 r/min) for 10 minutes, obtaining a primary mixture.

The primary mixture, 24 kg of finely powdery fused magnesia (comprising 97.2% by mass of MgO) and 6 kg of the co-milled powder were mixed in a mixer (during which, the rotation speed of the mixing plate was 11 r/min, and the rotation speed of the mixing rotor was 200 r/min) for 12 minutes, obtaining a final mixture.

The final mixture was put into a mold, and pressed under a pressure of 16 kN/cm² to form a green brick, and the green brick was dried at 150 °C for 60 hours after the forming; the dried brick was burnt at 1580 °C for 12.5 hours, obtaining a mag-galaxite spinel refractory material.

### Example 2

56.7 parts by mass of fused alumina (with a particle size 0.005-0.02 mm, and a purity of 98.5%), 16 parts of manganese dioxide (with a particle size of 0.03―0.04 mm, and a purity of 85%), 10 parts of manganese monoxide (with a particle size of 0.03-0.04 mm, and a purity of 85%), and 17.3 parts of caustic magnesia were mixed, and the resulting mixture was placed in the box and pre-calcined at 1450 °C for 3 hours, and then was co-milled in the 4R3216 type Raymond mill for 35 minutes, obtaining a co-milled powder with a particle size of. 0.045 mm.

1.8 kg of a dextrin solution (with a density of 1.28 g/mL) and 0.3 kg of a methyl cellulose solution (with a density of 1.28 g/mL), and 0.5 kg of sulfite pulp waste liquid were prepared and mixed, obtaining a binder.

42 kg of granular sintered magnesia (comprising 97.5% by mass of MgO) with a particle size distribution as follows: 0.088-0.999 mm accounting for 28%, 1-2.999 mm accounting for 48%, and 3-5 mm accounting for 24%, 12 kg of granular fused magnesia (comprising 97.0% by mass of MgO) with a particle size distribution as follows: 0.088-0.999 mm accounting for 29%, 1-2.999 mm accounting for 46%, 3-5 mm accounting for 25%, 16 kg of sintered magnesia-alumina spinel with a particle size of 0.1-3 mm (the total amount of alumina and magnesia being 98.0% by mass), and the binder were mixed in a mixer (during which, the rotation speed of the mixing plate was 11 r/min, and the rotation speed of the stirring rotor was 150 r/min) for 12 minutes, obtaining a primary mixture.

The primary mixture, 6 kg of the co-milled powder, and 24 kg of finely powdery fused magnesia (comprising 97.5% by mass of MgO) were mixed in a mixer (during which, the rotation speed of the mixing plate was 11 r/min, and the rotation speed of the mixing rotor was 180 r/min) for 15 minutes, obtaining a final mixture.

The final mixture was put into a mold, and pressed under a pressure of 16 kN/cm² to form a green brick, and the green brick was dried at 200 °C for 48 hours after the forming; the dried brick was burnt at 1600 °C for 11.5 hours, obtaining a mag-galaxite spinel refractory material.

### Example 3

50 parts by mass of aluminum hydroxide (with a particle size 0.005-0.02 mm, and a purity of 99%), 18 parts of manganese dioxide (with a particle size of 0.035-0.04 mm, and a purity of 80%), 6.5 parts of trimanganese tetroxide (with a particle size of 0.035-0.04 mm, and a purity of 80%), and 25.5 parts of magnesium carbonate were mixed, and the resulting mixture was placed in a box and pre-calcined at 1500 °C for 3 hours, and then was co-milled in 4R3216 type Raymond mill for 40 minutes, obtaining a co-milled powder with a particle size of 0.045 mm.

1.5 kg of a dextrin solution (with a density of 1.30 g/mL) and 0.2 kg of a methyl cellulose solution (with a density of 1.30 g/mL), 0.3 kg of a calcium lignosulfonate solution (with a density of 1.30 g/mL), and 1 kg of sulfite pulp waste liquid (with a density of 1.30 g/mL) were prepared and mixed, obtaining a binder.

55 kg of granular sintered magnesia (comprising 97.2% by mass of MgO) with a particle size distribution as follows: 0.088-0.999 mm accounting for 28%, 1-2.999 mm accounting for 46%, and 3-5 mm accounting for 26%, 16 kg of sintered magnesia-alumina spinel with a particle size of 0.1-3 mm (the total amount of alumina and magnesia being 98.3% by mass), and the binder were mixed in a mixer (during which, the rotation speed of the mixing plate was 11 r/min, and the rotation speed of the stirring rotor was 180 r/min) for 13 minutes, obtaining a primary mixture.

The primary mixture, 6 kg of the co-milled powder, 10 kg of finely powdery sintered magnesia (comprising 97.5% by mass of MgO), and 13 kg of finely powdery fused magnesia (comprising 97% by mass of MgO) were mixed in a mixer (during which, the rotation speed of the mixing plate was 11 r/min, and the rotation speed of the mixing rotor was 200 r/min) for 13 minutes, obtaining a final mixture.

The final mixture was put into a mold, and pressed under a pressure of 18 kN/cm² to form a green brick, and the green brick was dried at 220 °C for 50 hours after the forming; the dried brick was burnt at 1620 °C for 10 hours, obtaining a mag-galaxite spinel refractory material.

### Comparative Example 1

2.5 kg of a sulfite pulp waste liquid (with a density of 1.25 g/mL) was used as a binder.

87 kg of sintered magnesia (comprising 96.5% by mass of MgO) with a particle size distribution as follows: not larger than 0.088 mm accounting for 30%, 0.088-0.999 mm accounting for 25%, 1-2.999 mm accounting for 25%, 3-5 mm accounting for 20%, 13 kg of fused magnesia-alumina spinel with a particle size of 0.1-3 mm (the total amount of alumina and magnesia being 98.0% by mass), and the binder were mixed in a mixer (during which, the rotation speed of the mixing plate was 11 r/min, and the rotating speed of the stirring rotor was 200 r/min) for 10 minutes, obtaining a mixture.

The mixture was put into a mold, and pressed under a pressure of 13 kN/cm² to form a green brick, and the green brick was dried at 120 °C for 60 hours; the dried brick was burnt at 1580 °C for 10 hours, obtaining a magnesia-alumina spinel refractory material.

The mag-galaxite spinel refractory materials prepared in Examples 1 to 3 and Comparative Example 1 were tested according to the corresponding testing standards in Table 1, and the results were listed in Table 1. Among them, the chemical corrosion resistance index was tested as follows:

The mag-galaxite spinel refractory material was made into a ring and placed in a rotary anti-slag furnace, and heated to 1400-1600 °C. The garbage that needs to be treated in the cement rotary kiln was dried, compressed, and mixed with the fuel and sprayed into the rotary anti-slag furnace. The rotary anti-slag furnace was operated by simulating the operation status of a cement rotary kiln.

On the basis that the corrosion amount of the mag-galaxite spinel refractory material in Comparative Example 1 was 100%, the corrosion amount of the mag-galaxite spinel refractory material prepared in Examples 1 to 3 was calculated. A lower value means a smaller corrosion amount and a better corrosion resistance.

Table 1 Performance of the mag-galaxite spinel refractory materials prepared in Examples 1-3 and Comparative Example 1

| Example No. | Example 1 | Example 2 | Example3 | Comparative Example 1 | Test standard |
|---|---|---|---|---|---|
| Apparent porosity (%) | 14.68 | 15.08 | 15.23 | 14.75 | GB/T2997 |
| Bulk density (g/cm³) | 2.99 | 2.97 | 2.97 | 2.99 | GB/T2997 |
| cold crushing strength (MPa) | 89.5 | 85.4 | 84.9 | 99.8 | GB/T5072 |
| Modulus of rupture at elevated temperature (MPa) | 8.6 | 8.2 | 8.4 | 8.7 | GB/T3002 |
| Refractoriness under load T0.6 (°C) | >1700 | >1700 | >1700 | >1700 | GB/T5989 |
| Elasticity modulus (GPa) | 48.5 | 44.3 | 42.5 | 59.5 | GB/T30758 |
| Thermal shock resistance (water)(cycles) | 15 | 15 | 17 | 12 | GB/T30873 |
| Thermal shock resistance (wind)(cycles) | >100 | >100 | >100 | >30 | GB/T30873 |
| Thermal conductivity w/(m·k) | 2.965 | 2.932 | 2.879 | 3.011 | GB/T5990 |
| Permanent change in dimension (%) | -0.05 | -0.06 | -0.07 | -0.1 | GB/T5988 |
| Resistance to abrasion (cm³) | 9.41 | 9.35 | 9.54 | 9.03 | GB/T18301 |
| Adherence characteristics to clinker coating (MPa) | 25.8 | 26.4 | 28.7 | 18.6 | JC/T 2463 |
| Chemical corrosion resistance index (%) | 84 | 93 | 94 | 100 | — |

According to GB/T2275, it can be determined that the standard value of apparent porosity of substrate material in the cement rotary kiln is not more than 17%, and the standard value of bulk density is not less than 2.95 g/cm³, and the standard value of cold crushing strength is not less than 60 MPa. It can be seen from the results in Table 1 that the apparent porosity, bulk density and cold crushing strength of the mag-galaxite spinel refractory material of the present disclosure all fall within the standard range; moreover, the mag-galaxite spinel refractory material of the present disclosure exhibits better thermal shock resistance, and a relatively small scope of permanent change in dimension, indicating that the mag-galaxite spinel refractory material of the present disclosure has better volume stability; also, the mag-galaxite spinel refractory of the present disclosure has better adherence characteristic to clinker coating and chemical corrosion resistance performance, and could be used in both the burning zone and transition zone of a cement rotary kiln; further, the cement rotary kiln that includes a substrate made of the mag-galaxite spinel refractory material of the present disclosure could be used to treat garbage while reducing the corrosion of K₂O, Na₂O, Cl⁻¹, and sulfide in the garbage to the substrate.

In January 2017, Huaxin Cement Co., Ltd. (Sangzhi, Hunan, China) replaced a lining (both transition zone and burning zone) of a rotary kiln (which has a length of 0.8-35 m) with refractory bricks prepared from the mag-galaxite spinel refractory material of the present disclosure. In March 2017, the kiln was shut down for inspection, and it was found that the mag-galaxite spinel refractory material bricks for the lining were basically intact; in December 2017, the kiln was shut down for inspection, and it was found that the mag-galaxite spinel refractory material bricks for the lining had little corrosion damage (under operation, the temperature of the cylinder was about 260 °C, and the thickness of mag-galaxite spinel refractory material brick was not less than 170 mm).

In January 2017, Hubei Century Xinfeng Leishan Cement Co., Ltd. (China) replaced the lining (both transition zone and burning zone) of new dry process rotary kiln (with a production of 6000 t/d) with the refractory bricks prepared from the mag-galaxite spinel refractory material of the present disclosure; in July 2018, the kiln was shut down for inspection, and it was found that the bricks prepared from the mag-galaxite spinel refractory material, having an average thickness of 180-190 mm, exhibited uniform adherence characteristic to clinker coating, and a stable cylinder temperature, and exhibited good performance; in July 2019, the bricks prepared from the mag-galaxite spinel refractory material of the present disclosure were overhauled and confirmed that the operation was normal and the kiln was in good status.

It can be seen from the above actual operation test results that the present disclosure provides a mag-galaxite spinel refractory material which exhibits high corrosion resistance and good adherence characteristic to the clinker coating when used in the lining of rotary kilns.

Although the present disclosure has been described in detail with reference to the foregoing embodiments, it could be easily understood that those are part of embodiments of the present disclosure, not all of the embodiments. Other embodiments could be obtained by those skilled in the art without inventive labor, which fall within the protection scope of the present disclosure.
Item 1. A mag-galaxite spinel refractory material, which is obtained by burning raw materials comprising, in parts by mass,
75-85 parts of a magnesite clinker;
10-20 parts of a magnesia-alumina spinel;
1.5-5.0 parts of an aluminum compound;
1.0-5.0 parts of a manganese compound;
1.0-5.0 parts of a magnesium compound; and
2.0-3.5 parts of a binder.
Item 2. The mag-galaxite spinel refractory material as described in Item 1, wherein the magnesite clinker comprises MgO in an amount of not less than 97% by mass; the magnesite clinker comprises a granular magnesite clinker and a finely powdery magnesite clinker, and a mass ratio of the granular magnesite clinker and the finely powdery magnesite clinker is in the range of (1.5-3) : 1, the granular magnesite clinker has a particle size of 0.088-5 mm, and the finely powdery magnesite clinker has a particle size of not larger than 0.063 mm; the granular magnesite clinker has a gradient particle size distribution of, in percentages by mass,

| | |
|---|---|
| 0.088-0.999 mm accounting for | 25-30%; |
| 1-2.999 mm accounting for | 43-48%; |
| 3-5 mm accounting for | 24-28%. |

Item 3. The mag-galaxite spinel refractory material as described in Item 1 or 2, wherein the magnesium compound is one or more selected from the group consisting of MgO, Mg(OH)₂, and MgCO₃.
Item 4. The mag-galaxite spinel refractory material as described in any one of Items 1 to 3, wherein the manganese compound is one or more selected from the group consisting of MnO, MnO₂, Mn₂O₃ and Mn₃O₄, and the manganese compound has a purity of not less than 70%, and a particle size of less than 0.063 mm.
Item 5. The mag-galaxite spinel refractory material as described in any one of Items 1 to 4, wherein the aluminum compound is one or more selected from the group consisting of Al₂O₃ and Al(OH)₃, and the aluminum compound has a purity of not less than 90%, and a particle size of less than 0.045 mm.
Item 6. The mag-galaxite spinel refractory material as described in any one of Items 1 to 5, wherein the magnesia-alumina spinel is one or more selected from the group consisting of a sintered magnesia-alumina spinel and a fused magnesia-alumina spinel;
the magnesia-alumina spinel comprises alumina and magnesia, wherein the total amount of alumina and magnesia is not less than 90% by mass, and the magnesia-alumina spinel has a particle size of less than 3 mm;
the binder is one or more selected from the group consisting of dextrin solution, calcium lignosulfonate solution, methyl cellulose solution and sulfite pulp waste liquid.
Item 7. A method for preparing the mag-galaxite spinel refractory material as described in any one of Items 1 to 6, comprising,
subjecting an aluminum compound, a manganese compound, and a magnesium compound to a first mixing, a pre-calcining, and a co-milling in sequence, to obtain a co-milled powder;
subjecting the co-milled powder, a magnesite clinker, a magnesia-alumina spinel, and a binder to a second mixing, to obtain a final mixture;
forming the final mixture, to obtain a green brick; and
burning the green brick, to obtain the mag-galaxite spinel refractory material.
Item 8. The method as described in Item 7, wherein subjecting the co-milled powder, a magnesite clinker, a magnesia-alumina spinel, and a binder to a second mixing comprises steps of
subjecting a granular magnesite clinker, a magnesia-alumina spinel, and a binder to a third mixing, to obtain a primary mixture; and
subjecting the primary mixture, the co-milled powder, and a finely powdery magnesite clinker to a fourth mixing, to obtain a final mixture.
Item 9. The method as described in Item 7 or 8, wherein burning the green brick is performed at a temperature of 1550-1680 °C for 10-15 hours.
Item 10. Use of the mag-galaxite spinel refractory material as described in any one of Items 1 to 6 or the mag-galaxite spinel refractory material prepared by the method as described in any one of Items 7 to 9 in a lining of a cement or lime rotary kiln.

## Claims

1. A method for preparing a mag-galaxite spinel refractory material comprising,
subjecting an aluminum compound, a manganese compound, and a magnesium compound to a first mixing, a pre-calcining, and a co-milling in sequence, to obtain a co-milled powder;
subjecting the co-milled powder, a magnesite clinker, a magnesia-alumina spinel, and a binder to a second mixing, to obtain a final mixture;
forming the final mixture, to obtain a green brick; and
burning the green brick, to obtain the mag-galaxite spinel refractory material.

2. The method as claimed in claim 1, wherein subjecting the co-milled powder, the magnesite clinker, the magnesia-alumina spinel, and the binder to a second mixing comprises steps of
subjecting a granular magnesite clinker, the magnesia-alumina spinel, and the binder to a third mixing, to obtain a primary mixture; and
subjecting the primary mixture, the co-milled powder, and a finely powdery magnesite clinker to a fourth mixing, to obtain a final mixture.

3. The method as claimed in claim 1 or 2, wherein burning the green brick is performed at a temperature of 1550-1680 °C for 10-15 hours.

4. The method as claimed in any of claims 1 to 3, wherein 75-85 parts by mass of the magnesite clinker, 10-20 parts by mass of the magnesia-alumina spinel, 1.5-5.0 parts by mass of the aluminum compound, 1.0-5.0 parts by mass of the manganese compound, 1.0-5.0 parts by mass of the magnesium compound, and 2.0-3.5 parts by mass of the binder are used (all in parts by mass).

5. The method as claimed in any of claims 1 to 4, wherein the co-milled powder has a particle size of not more than 0.045 mm (as measured by ISO 2926:1974, NEQ).

6. The method as claimed in any of claims 1 to 5, wherein
the magnesite clinker comprises MgO in an amount of not less than 97% by mass (as measured by ISO12677:2003, MOD);
the magnesite clinker comprises a granular magnesite clinker and a finely powdery magnesite clinker, and a mass ratio of the granular magnesite clinker and the finely powdery magnesite clinker is in the range of (1.5-3) : 1;
the granular magnesite clinker has a particle size of 0.088-5 mm (as measured by ISO 2926:1974, NEQ), and the finely powdery magnesite clinker has a particle size of not larger than 0.063 mm (as measured by ISO 2926:1974, NEQ); and
the granular magnesite clinker has a gradient particle size distribution of, in percentages by mass,
| | |
|---|---|
| 0.088-0.999 mm accounting for | 25-30%; |
| 1-2.999 mm accounting for | 43-48%; |
| 3-5 mm accounting for | 24-28%, |
which is determined by sieving.

7. The method as claimed in any of claims 1 to 6, wherein the magnesium compound is one or more selected from the group consisting of MgO, Mg(OH)₂, and MgCO₃.

8. The method as claimed in any of claims 1 to 7, wherein the manganese compound is one or more selected from the group consisting of MnO, MnO₂, Mn₂O₃ and Mn₃O₄, and the manganese compound has a particle size of less than 0.063 mm (as measured by ISO6230:1989, IDT).

9. The method as claimed in any of claims 1 to 8, wherein the aluminum compound is one or more selected from the group consisting of Al₂O₃ and Al(OH)₃, and the aluminum compound has a particle size of less than 0.045 mm (as measured by ISO 13320:2009).

10. The method as claimed in any of claims 1 to 9, wherein
the magnesia-alumina spinel is one or more selected from the group consisting of a sintered magnesia-alumina spinel and a fused magnesia-alumina spinel;
the magnesia-alumina spinel comprises aluminium oxide and magnesium oxide, wherein the total amount of aluminium oxide and magnesium oxide is not less than 90% by mass (as measured by ISO12677:2003, MOD), and the magnesia-alumina spinel has a particle size of less than 3 mm (as measured by ISO 2926:1974, NEQ);
the binder is one or more selected from the group consisting of dextrin solution, calcium lignosulfonate solution, methyl cellulose solution, and sulfite pulp waste liquid.

11. A mag-galaxite spinel refractory material obtainable by the method as claimed in any of claims 1 to 10.

12. Use of the mag-galaxite spinel refractory material of claim 11 in a lining of a cement or lime rotary kiln.
